# FASCICULE DE BREVET EUROPEEN

(11) **EP 2 663 748 B1**
(45) Date de publication et mention de la délivrance du brevet: **17.06.2015**
(21) Numéro de dépôt: 11805101.0
(22) Date de dépôt: 06.12.2011
(51) Int. Cl.: F01N 3/035, F01N 13/02

(54) **LIGNE D'ECHAPPEMENT POUR UN MOTEUR A COMBUSTION INTERNE**
ABGASLEITUNG EINES VERBRENNUNGSMOTORS
INTERNAL COMBUSTION ENGINE EXHAUST LINE

(30) Priorité: 11.01.2011 FR 1150211
(43) Date de publication de la demande: 20.11.2013
(73) Titulaire: Peugeot Citroën Automobiles SA, 78140 Vélizy Villacoublay (FR)
(72) Inventeur: CREHAN, Gabriel, F-92420 Vaucresson (FR)
(74) Mandataire: Renous Chan, Véronique
(86) Numéro de dépôt international: PCT/FR2011/052878
(87) Numéro de publication internationale: WO 2012/095573

(56) Documents cités:
- EP-A1- 1 304 152
- EP-A1- 1 961 933
- WO-A1-2005/014146
- US-A1- 2006 196 167
- US-A1- 2007 240 406

## Description

L'invention concerne une ligne d'échappement pour un moteur à combustion interne. L'invention concerne également un ensemble de motorisation comportant cette ligne d'échappement. L'invention concerne enfin un véhicule équipé de cet ensemble de motorisation.

Les gaz d'échappement émis par un moteur à combustion interne contiennent des éléments polluants dont il est souhaitable de réduire le rejet dans l'atmosphère. Par « éléments polluants » on désigne plus particulièrement des oxydes d'azote NOₓ (N₂O, NO et NO₂), du monoxyde de carbone (CO), des hydrocarbures imbrûlés (HC), et des particules de suie. Afin de limiter les émissions d'éléments polluants, il est connu de réaliser un post-traitement des gaz traversant une ligne d'échappement d'un moteur à combustion interne. Typiquement, la ligne d'échappement d'un moteur à combustion interne comporte:
- une tubulure recevant les gaz d'échappement du moteur,
- un filtre à particules permettant de retenir et de brûler les particules de suies contenues dans les gaz,
- un catalyseur d'oxydation pour transformer les monoxydes de carbones (CO) et les hydrocarbures (HC) en dioxydes de carbone (CO₂) et en eau (H₂O), et
- un catalyseur de réduction pour transformer les oxydes d'azote (NOₓ) en azote (N₂) et en eau (H₂O).

Dans le but de minimiser l'encombrement de la ligne d'échappement, il a été proposé par le déposant d'intégrer le catalyseur d'oxydation et le catalyseur de réduction à l'intérieur du filtre à particules pour former un filtre à particules dit « bi-catalysé ».

Un filtre à particules bi-catalysé comporte généralement une structure en nid d'abeille. Le filtre comprend une face d'admission permettant l'admission des gaz d'échappement à l'intérieur du filtre et une face d'évacuation permettant l'évacuation des gaz d'échappement hors du filtre. Le filtre comporte entre les faces d'admission et d'évacuation un ensemble de canaux ou conduits adjacents d'axes parallèles entre eux séparés par des parois poreuses de filtration. Les conduits sont obturés à l'une ou l'autre de leurs extrémités pour délimiter des conduits d'admission débouchant seulement sur la face d'admission et des conduits d'évacuation débouchant seulement sur la face d'évacuation. Les conduits sont alternativement obturés dans un ordre tel que les gaz d'échappement, au cours de la traversée du filtre, sont contraints de traverser les parois latérales des conduits d'entrée pour rejoindre les conduits de sortie. De cette manière, les particules de suie se déposent et s'accumulent sur les parois poreuses du filtre. Ces parois internes du filtre à particules sont imprégnées de revêtements catalytiques pour former le catalyseur de réduction et le catalyseur d'oxydation. Les documents US 2007/0240406 et EP1961933 divulguent de tels filtres catalysés.

Typiquement, le filtre à particules est réalisé en carbure de silicium.

Un premier inconvénient d'un tel type de filtre à particules bi-catalysé est que pour garantir une dépollution réglementaire des gaz d'échappement, il est nécessaire que la quantité de revêtement catalytique imprégné sur les parois soit supérieure à un seuil minimum.

Si la quantité de revêtement catalytique imprégné sur les parois est trop importante, les pores des parois poreuses du filtre s'obstruent. Dans ce cas, lors du fonctionnement du moteur, les gaz d'échappement traversent plus difficilement ce filtre. En conséquence, la pression des gaz d'échappement dans la tubulure, en entrée du filtre à particules, augmente. Indirectement, une obstruction des pores conduit à une augmentation de la consommation de carburant du moteur.

Une solution connue est d'augmenter le volume du filtre à particules de manière à pouvoir déposer davantage de revêtement catalytique sans obstruer les pores du filtre. Toutefois, cette solution est à éviter car elle augmente l'encombrement de la ligne d'échappement.

Un second inconvénient est que la réduction des oxydes d'azote (NOₓ) nécessite que la température des gaz d'échappement soit supérieure à une température seuil pour être mise en oeuvre. Plus la température des gaz d'échappement est basse, plus la quantité d'oxydes d'azote réduite est faible. Le filtre étant réalisé en carbure de silicium, celui-ci dissipe la chaleur des gaz d'échappement traversant ce filtre et donc diminue la quantité d'oxydes d'azote réduits. Dans ces conditions il est connu d'augmenter la quantité de catalyseur dans le filtre à particules pour conserver une quantité satisfaisante d'oxydes d'azote réduits à basse température. Toutefois, cette quantité de catalyseur (typiquement des matériaux précieux) est souvent non négligeable. Cet ajout de catalyseur représente un coût pour le fabricant du filtre.

Enfin, un troisième inconvénient est que pour permettre la réduction des oxydes d'azotes (NOₓ), un agent réducteur, typiquement de l'urée, est injecté dans la tubulure en amont du filtre. Dans les lignes d'échappement connues du déposant, il est nécessaire d'injecter l'agent de réduction loin en amont du filtre à particules pour laisser le temps à l'urée de se décomposer en ammoniaque (NH₃) sous l'effet de la chaleur des gaz d'échappement. Ceci est problématique pour des véhicules de petite taille pour lesquels la tubulure est courte.

L'invention vise à résoudre un ou plusieurs de ces inconvénients.

L'invention concerne une ligne d'échappement pour un moteur à combustion interne, cette ligne d'échappement comportant:
- une tubulure recevant des gaz d'échappement, et
- un filtre à particules logé à l'intérieur de cette tubulure imprégné:
   - d'un premier revêtement catalytique formant un premier catalyseur de réduction d'oxydes d'azotes (NOₓ), et
   - d'un second revêtement catalytique formant un catalyseur d'oxydation de monoxydes de carbone (CO) et d'hydrocarbures (HC),
- un filtre additionnel, logé dans la tubulure en amont du filtre à particules, et imprégné d'un revêtement catalytique formant un second catalyseur de réduction des oxydes d'azotes (NOₓ), et
- filtre additionnel comporte une structure interne telle que, le filtre additionnel crée une perte de charge inférieure à la perte de charge créée par le même volume de filtre à particules imprégné par la même quantité de même revêtement catalytique.

Dans la ligne d'échappement présentée plus haut, le filtre additionnel est capable d'être imprégné d'une quantité de premier revêtement catalytique par unité de volume supérieure au filtre à particules. Ainsi, pour augmenter la quantité de revêtement catalytique dans la ligne d'échappement, tout en ne bouchant pas les pores du filtre à particules, il est moins encombrant d'ajouter à la ligne d'échappement le filtre additionnel que d'allonger le filtre à particules.

Par ailleurs, le filtre additionnel crée une perte de charge inférieure à la perte de charge qui serait créée par le même volume de filtre à particules imprégné par la même quantité de revêtement catalytique que le filtre additionnel. Ainsi, la consommation du moteur n'est pas détériorée par rapport à un filtre à particules dont la longueur serait allongée.

Les modes de réalisation de cette ligne d'échappement peuvent comporter une ou plusieurs des caractéristiques suivantes:
▪ ligne d'échappement, dans laquelle:
   - le filtre à particules comporte:
      - des conduits d'admission débouchant uniquement sur une face d'admission des gaz d'échappement,
      - des conduits d'évacuation débouchant uniquement sur une face d'évacuation des gaz d'échappement, et
      - des parois poreuses pour connecter fluidiquement les conduits d'admission et les conduits d'évacuation,
      - le filtre additionnel comporte des conduits débouchant sur une face d'admission d'une part et sur une face d'évacuation d'autre part, le diamètre de ces conduits étant supérieur au diamètre des pores des parois poreuses du filtre à particules,
▪ la capacité thermique massique du matériau dans lequel est réalisé le filtre additionnel est inférieure à la capacité thermique massique du matériau dans lequel est réalisé le filtre à particules,
▪ la ligne comporte un agent réducteur qui se décompose lorsqu'il est chauffé pour produire un réactif qui intervient dans la réduction des oxydes d'azote par le premier revêtement catalytique et un injecteur pour injecter cet agent réducteur dans la tubulure en amont du filtre additionnel,
▪ le revêtement catalytique avec lequel est imprégné le filtre additionnel comprend des zéolites de manière à accélérer la décomposition de l'agent réducteur,
▪ le filtre additionnel est réalisé en cordiérite et/ou le filtre à particules est réalisé en carbure de silicium, et
▪ ligne d'échappement, dans laquelle:
   - les conduits d'admission du filtre à particules sont seulement imprégnés du premier revêtement catalytique, et
   - les conduits d'évacuation sont seulement imprégnés du second revêtement catalytique.

Les modes de réalisation de cette ligne d'échappement présentent en outre les avantages suivants:
▪ lorsque le diamètre des conduits du filtre additionnel est supérieur au diamètre des pores du filtre à particules, il est possible d'imprégner le filtre additionnel d'une quantité de revêtement catalytique par unité de volume plus importante que pour le filtre à particules en créant une perte de charge plus faible,
▪ lorsque la capacité thermique massique du filtre additionnel est inférieure à la capacité thermique massique du filtre à particules, le filtre additionnel monte plus rapidement en température que le filtre à particules ce qui permet de débuter la réduction des oxydes d'azotes à plus basse température lors de la mise en marche du moteur,
▪ lorsque le revêtement catalytique du filtre additionnel comprend des zéolites, la décomposition de l'agent réducteur est accélérée par le filtre additionnel ce qui permet indirectement de raccourcir la longueur de la tubulure en amont du filtre additionnel, et
▪ lorsque les conduits d'admissions sont seulement imprégnés du premier revêtement catalytique, et les conduits sortants sont seulement imprégnés du second revêtement catalytique, la quantité d'ammoniaque piégée dans le premier revêtement et oxydée par le second revêtement pour former des oxydes d'azote NOx est limitée.

L'invention concerne également un ensemble de motorisation, cet ensemble comportant:
- un moteur à combustion interne, et
- une ligne d'échappement telle que présentée plus haut.

L'invention concerne enfin un véhicule automobile équipé de cet ensemble de motorisation.

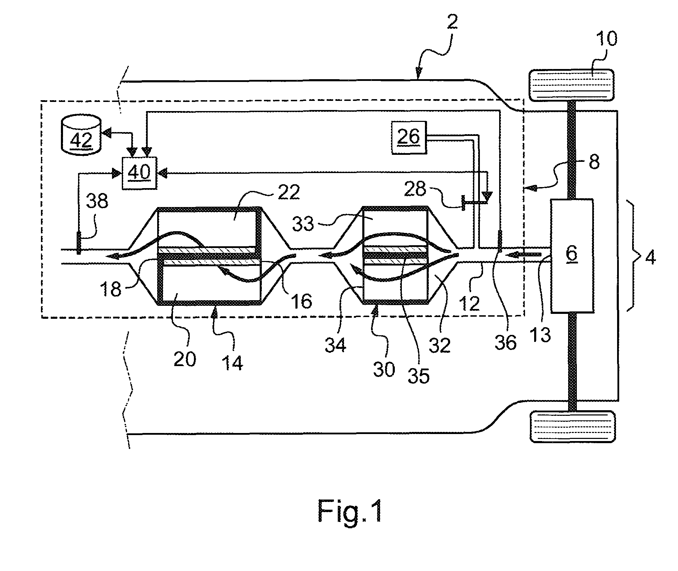

D'autres caractéristiques et avantages de l'invention ressortiront clairement de la description qui en est faite ci-après, à titre indicatif et nullement limitatif, en référence à la figure 1. La figure 1 est une illustration schématique partielle d'un véhicule équipé d'un ensemble de motorisation comportant une ligne d'échappement.

Dans la suite de cette description, les caractéristiques et fonctions bien connues de l'homme du métier ne sont pas décrites en détail.

La figure 1 représente un véhicule 2 tel qu'un véhicule automobile. Par exemple, le véhicule 2 est une voiture. Ce véhicule 2 est équipé d'un ensemble de motorisation 4. Cet ensemble 4 comporte un moteur 6 à combustion interne et une ligne d'échappement 8.

Le moteur 6 est propre à entraîner en rotation des roues motrices 10 du véhicule 2. Ici, le moteur 6 est un moteur Diesel. Lors de son fonctionnement, le moteur 6 rejette des gaz d'échappement qui avant d'être expulsés à l'extérieur du véhicule 2 sont reçus par la ligne d'échappement 8 propre à traiter ces gaz.

La ligne d'échappement 8 comporte une tubulure 12 recevant les gaz d'échappement par un orifice 13 d'un collecteur d'échappement du moteur 6. Par exemple, la tubulure 12 est un tube cylindrique de section circulaire. Ici, la tubulure 12 est en acier.

La ligne d'échappement 8 comporte un filtre à particules 14 (également appelé FAP) apte à retenir les particules de suie contenues dans les gaz d'échappement et à brûler ces particules. De préférence, le filtre 14 est apte à retenir les particules de diamètre supérieur ou égal à 23nm. Le filtre 14 est disposé à l'intérieur de la tubulure 12.

Le filtre 14 est avantageusement réalisé en carbure de silicium. Le filtre 14 comporte ici une structure en nid d'abeille. Dans cet exemple, la structure interne du filtre 14 est connue en soi. Celle-ci a déjà été présentée en introduction, aussi elle n'est pas décrite en détail. Par la suite on désigne par les références 16 et 18, respectivement, la face d'admission et la face d'évacuation de ce filtre 14.

Le filtre 14 comporte des conduits d'admission et d'évacuation. Afin de simplifier la figure 1, seul un conduit d'admission 20 débouchant sur la face d'admission 16 et un conduit d'évacuation 22 débouchant sur la face d'évacuation 18 sont représentés. Dans l'exemple, les conduits 20 et 22 sont collés les uns aux autres par l'intermédiaire d'un ciment. Typiquement, ce ciment peut comprendre une ou plusieurs des espèces chimiques suivantes: la cordiérite, SiC, B₄C, Si₃N₄, BN, AIN, Zr0₂, mullite, AL titanate, ZrB₂, et/ou Sialon (alliage de silicium, aluminium, oxygène, et nitride).

Dans l'exemple, la longueur du filtre 14 est comprise en 5cm et 75cm. De préférence la longueur est comprise entre 18cm et 25cm.

Le filtre 14 est un filtre bi-catalysé. A cet effet, les parois poreuses des conduits sont imprégnées de deux revêtements catalytiques.

Les parois poreuses des conduits d'admission 20 sont ici seulement imprégnées d'un revêtement catalytique R_{cat1}. Le revêtement R_{cat1} forme un catalyseur de réduction sélectif (également appelé SCR). Ce catalyseur de réduction sélectif est apte à transformer les oxydes d'azotes (NOₓ) contenus dans les gaz d'échappement traversant le filtre 14 en azotes (N₂) et en eau (H₂O). Le revêtement catalytique R_{cat1} est connu en soi. Dans l'exemple, le revêtement R_{cat1} comprend une ou plusieurs des espèces chimiques suivantes: Al₂O₃, TiO₂, ZrO₂, CeO₂, Y₂O₃, PrO₂, SiO₂.

Les parois poreuses des conduits d'évacuation 22 sont ici seulement imprégnées d'un revêtement catalytique R_{cat2}. Le revêtement R_{cat2} forme un catalyseur d'oxydation diesel (également appelé DOC). Ce catalyseur d'oxydation diesel est apte à transformer les monoxydes de carbone (CO) et les hydrocarbures

(HC) contenus dans les gaz d'échappement traversant le filtre 14 en dioxyde de carbone (CO₂) et en eau (H₂O). Le revêtement catalytique R_{cat2} est connu en soi. Par exemple, le revêtement R_{cat2} comprend une ou plusieurs des espèces chimiques suivantes: Al₂O₃, TiO₂, ZrO₂, CeO₂, Y₂O₃.

Les revêtements R_{cat1} et R_{cat2} comprennent par ailleurs un catalyseur. Dans l'exemple, le catalyseur est un matériau ou un alliage de matériaux appartenant au groupe platine (également appelé « Metal Group Platine (MGP)). Par « matériaux du groupe platine » on désigne ici le rhodium (Rh), le ruthénium (Ru), l'iridium (Ir), le rhénium (Re), l'osmium (Os), la platine (Pt) et le palladium (Pd). Ici, le catalyseur est un alliage de platine (Pt) et de palladium (Pd).

De préférence, la masse de matériaux appartenant au groupe platine est supérieure dans le revêtement catalytique R_{cat2} que dans le revêtement catalytique R_{cat1}.

Avantageusement, la quantité totale de revêtements catalytiques imprégnés dans le filtre 14 est supérieure ou égale à 50g par litre de filtre, et de préférence, la quantité totale de revêtements catalytiques imprégnés est supérieure à 100g par litre de filtre. Généralement, la quantité de revêtement catalytique dans le filtre 14 est inférieure à 200g par litre de filtre. Ici, le revêtement R_{cat1} et le revêtement R_{cat2} représentent chacun entre 40 et 60% du volume du revêtement catalytique total imprégné.

La ligne d'échappement 8 comporte par ailleurs un réservoir 26. Le réservoir 26 contient un agent de réduction pour réduire les oxydes d'azotes (NOₓ) contenus dans les gaz d'échappement en azotes (N₂) et en eau (H₂O). Typiquement, cet agent de réduction est de l'urée. Sous l'effet de la chaleur, l'urée se décompose en ammoniaque (NH₃) qui réagit avec les NOx au niveau des revêtements catalyseurs de réduction des NOₓ. L'agent de réduction est injecté dans la tubulure 12 en amont du filtre à particules 14 par l'intermédiaire d'un injecteur 28. Dans l'exemple, l'injecteur 28 injecte l'urée en aval d'un turbo-compresseur (non illustré). Toujours dans l'exemple, l'injecteur 28 comprend un capteur de la température des gaz d'échappement en amont du filtre à particules 14.

Dans cette description, les termes « aval » et « amont » sont définis par rapport au sens de circulation des gaz d'échappement dans la tubulure 12. Le sens de circulation des gaz d'échappement dans la tubulure 12 est représenté par des flèches sur la figure 1.

La ligne d'échappement 8 comporte également un filtre additionnel 30. Le filtre 30 est apte à réaliser la réduction des oxydes d'azote (NOₓ) contenus dans les gaz d'échappement en azotes (N₂) et en eau (H₂O).

Le filtre 30 comprend des conduits 33 traversant le filtre 30 de part en part. Les conduits 33 débouchent sur une face d'admission 32 d'une part et sur une face d'évacuation 34 d'autre part. Afin de simplifier la figure 1, seul deux conduits 33 sont représentés. Les conduits 33 sont séparés par des parois internes 35. Ici, ces parois 35 sont moins poreuses que les parois du filtre 14.

Les parois internes 35 du filtre 30 séparant les conduits 33 entre eux sont imprégnées d'un revêtement catalytique R_{cat3} formant un catalyseur de réduction. Dans l'exemple les revêtements R_{cat1} et R_{cat3} sont de même composition chimique à l'exception du fait que le revêtement R_{cat3} comprend des zéolites de manière à ce que lorsque les gaz d'échappement traversent les conduits 33, le revêtement R_{cat3} accélére la décomposition de l'urée en ammoniaque.

Dans ces conditions, une grande longueur de tubulure 12, entre l'injecteur 28 et le filtre 14, de manière à ce que les gaz d'échappement soit suffisamment longtemps en contact avec l'urée pour l'amener à la température de décomposition, n'est plus nécessaire. La longueur de la tubulure en amont du filtre 14 peut alors être raccourcie.

Par ailleurs, la structure interne filtre 30 est telle que, à volume égal avec le filtre 14, le filtre 30 est apte à être imprégné d'une quantité de revêtement R_{cat3} par unité de volume supérieure au filtre 14, tout en créant une perte de charge inférieure à la perte de charge créée par le même volume du filtre à particules 14. A cet effet, dans l'exemple le diamètre des conduits 33 est supérieur au diamètre des pores des parois internes du filtre à particules 14.

En effet, les conduits 33 traversant le filtre de part en part et la paroi 35 étant peu poreuse, la perte de charge engendrée par le filtre 30 est fonction de la longueur du filtre 30, de la quantité de revêtement imprégné sur les parois 35 et du diamètre des conduits 33. A l'inverse, les conduits 20 et 22 étant obturés au niveau d'une face du filtre 14, la perte de charge engendrée par le filtre 14 est fonction de la longueur du filtre 14, de la quantité de revêtement imprégnée et de la taille des pores des parois poreuses.

Le filtre 30 est logé dans la tubulure 12 entre l'injecteur 28 et le filtre à particules 14. La distance séparant les filtres 14 et 30 est ici inférieure à 20 millimètres, de préférence inférieure à 10 mm.

Dans la suite de cette description, on désigne par « capacité thermique massique d'un matériau » l'énergie qu'il faut apporter à une masse de 1 kg de ce matériau pour augmenter sa température de un Kelvin. La capacité thermique est exprimée en Joule.Kelvin⁻¹.Kg⁻¹. La capacité thermique massique d'un matériau définit la capacité de ce matériau à absorber de la chaleur et à restituer cette chaleur.

Avantageusement, la capacité thermique du matériau dans lequel est réalisé le filtre 30 est inférieure à la capacité thermique du matériau dans lequel est réalisé le filtre 14. Dans ces conditions, lors du fonctionnement du moteur 6, la température à l'intérieur du filtre 30 atteint plus rapidement la température de « light-off » que le filtre 14. Par température de « light-off », on désigne la température à partir de laquelle 50% des oxydes d'azotes (NOₓ) contenus dans les gaz d'échappement sont réduits par le revêtement catalyseur de réduction. Dans ces conditions, la réduction des oxydes d'azote (NOₓ) est mise en oeuvre plus rapidement dans le filtre 30 que dans le filtre 14 ce qui permet de dépolluer les gaz d'échappement plus tôt lors de la mise en marche du moteur 6.

Par ailleurs, de manière à permettre au filtre 30 de monter en température rapidement, la longueur du filtre 30 est avantageusement comprise entre 2cm et 10cm, et de préférence comprise entre 5cm et 10cm.

Dans l'exemple, le filtre 30 est un monolithe de cordiérite.

La ligne d'échappement 8 comporte par ailleurs des capteurs 36 et 38 de la quantité de NOₓ contenus dans les gaz d'échappement, respectivement, en amont du filtre 30 et en aval du filtre 14.

La ligne d'échappement 8 comporte enfin une unité de calcul 40 pour:
- acquérir des mesures issues des capteurs 36 et 38, et
- commander la quantité d'urée injectée par l'injecteur 28 dans la tubulure 12 en fonction des mesures acquises.

Par exemple, l'unité 40 est réalisée à partir d'un calculateur électronique programmable apte à exécuter des instructions enregistrées sur un support d'enregistrement d'informations 42. A cet effet, l'unité 40 est raccordée à un support d'enregistrement d'informations contenant des instructions pour l'exécution d'un procédé de commande des capteurs 36, 38 et de l'injecteur 28.

De nombreux autres modes de réalisation sont possibles.

D'autres matériaux peuvent être utilisés pour réaliser les filtres 14 et 30. Par exemple, les filtres 14 et 30 peuvent comprendre un ou plusieurs des matériaux suivants: Cordiérite, SiC, B₄C, Si₃N₄, BN, AIN, Al₂O₃, ZrO₂, mullite, Al titanate, ZrB₂, and Sialon.

Le revêtement R_{cat1} peut également être acide.

Dans les revêtements R_{cat1} et R_{cat3} le catalyseur ne comprend pas nécessairement un matériau du groupe platine. D'autres catalyseurs peuvent être utilisées en complément ou en remplacement. Par exemple, le catalyseur peut être un des métaux précieux suivant: l'or (Au), et/ou l'argent (Ar). Le catalyseur peut également comprendre des métaux alcalins, des métaux alcalino-terreux, des métaux lanthanides, des métaux actinides, des métaux de transition, et/ou des perovskites. Un métal de transition peut être du scandium (Sc), du titane (Ti), du vanadium (V), du chrome (Cr), du manganèse (Mn), du fer (Fe), du cobalt (Co), du nickel (Ni), du cuivre (Cu) ou du zinc (Zn).

Dans les revêtements R_{cat2} le catalyseur ne comprend pas nécessairement un matériau du groupe platine. D'autres catalyseurs peuvent être utilisés en complément ou en remplacement. Par exemple, le catalyseur peut être un des métaux précieux suivant: l'or (Au), et/ou l'argent (Ar). Le catalyseur peut également comprendre des métaux de transitions, des métaux alcalins, des métaux alcalino-terreux, des métaux lanthanides, des pièges à hydrocarbons tels que les zéolites ou de l'argile, des métaux actinides, et/ou des perovskites.

L'injecteur peut être disposé en amont du turbo-compresseur.

D'autres agents réducteurs que l'urée peuvent être utilisés.

Les revêtements catalytiques R_{cat1} et R_{cat3} peuvent être de même composition chimique.

Les capteurs 36, 38 peuvent être omis. Dans ce cas, l'unité 40 peut commander l'injecteur 28 à partir de formules ou de tables pré-enregistrées.

Le moteur n'est pas nécessairement un moteur de type diesel. Le moteur peut être un moteur de type essence. Dans ce cas, le filtre à particules peut être imprégné de manière à mettre en oeuvre les fonctions d'un catalyseur trois voies.

## Revendications

1. Ligne d'échappement (8) pour un moteur à combustion interne (6), cette ligne d'échappement comportant:
- une tubulure (12) recevant des gaz d'échappement, et
- un filtre à particules (14) logé à l'intérieur de cette tubulure (12) imprégné:
• d'un premier revêtement catalytique formant un premier catalyseur de réduction d'oxydes d'azotes (NOₓ), et
• d'un second revêtement catalytique formant un catalyseur d'oxydation de monoxydes de carbone (CO) et d'hydrocarbures (HC),
**caractérisé en ce que**:
- la ligne (8) comporte un filtre additionnel (30), logé dans la tubulure (12) en amont du filtre à particules (14), et imprégné d'un revêtement catalytique formant un second catalyseur de réduction des oxydes d'azotes (NOx), et
- le filtre additionnel (30) comporte une structure interne telle que,, le filtre additionnel (30) crée une perte de charge inférieure à la perte de charge créée par le même volume de filtre à particules (14) imprégné par la même quantité de même revêtement catalytique.

2. Ligne d'échappement (8) selon la revendication 1, dans laquelle:
- le filtre à particules (14) comporte :
• des conduits d'admission (20) débouchant uniquement sur une face d'admission (16) des gaz d'échappement,
• des conduits d'évacuation (22) débouchant uniquement sur une face d'évacuation (18) des gaz d'échappement, et
• des parois poreuses pour connecter fluidiquement les conduits d'admission (20) et les conduits d'évacuation,
- le filtre additionnel (30) comporte des conduits (33) débouchant sur une face d'admission (32) d'une part et sur une face d'évacuation (34) d'autre part, le diamètre de ces conduits (33) étant supérieur au diamètre des pores des parois poreuses du filtre à particules (14).

3. Ligne d'échappement (8) selon l'une quelconque des revendications précédentes, dans laquelle la capacité thermique massique du matériau dans lequel est réalisé le filtre additionnel (30) est inférieure à la capacité thermique massique du matériau dans lequel est réalisé le filtre à particules (14).

4. Ligne d'échappement (8) selon l'une quelconque des revendications précédentes, dans laquelle la ligne (8) comporte un agent réducteur qui se décompose lorsqu'il est chauffé pour produire un réactif qui intervient dans la réduction des oxydes d'azote par le premier revêtement catalytique et un injecteur (28) pour injecter cet agent réducteur dans la tubulure (12) en amont du filtre additionnel (30).

5. Ligne d'échappement (8) selon l'une quelconque des revendications précédentes, dans laquelle le revêtement catalytique avec lequel est imprégné le filtre additionnel (30) comprend des zéolites de manière à accélérer la décomposition de l'agent réducteur.

6. Ligne d'échappement (8) selon l'une quelconque des revendications précédentes, dans laquelle le filtre additionnel (30) est réalisé en cordiérite et/ou le filtre à particules (14) est réalisé en carbure de silicium.

7. Ligne d'échappement (8) selon l'une quelconque des revendications précédentes, dans laquelle:
- les conduits d'admission (20) du filtre à particules sont seulement imprégnés du premier revêtement catalytique, et
- les conduits d'évacuation (22) sont seulement imprégnés du second revêtement catalytique.

8. Ensemble de motorisation (4), cet ensemble comportant:
- un moteur à combustion interne (6), et
- une ligne d'échappement (8) conforme à l'une quelconque des revendications précédentes.

9. Ensemble (4) selon la revendication 8, dans lequel le moteur (6) est un moteur de type diesel.

10. Véhicule (2), **caractérisé en ce qu'**il comporte un ensemble de motorisation (4) conforme à la revendication 8 ou 9.

## Patentansprüche

1. Abgasleitung (8) für einen Verbrennungsmotor (6), wobei diese Abgasleitung Folgendes umfasst:
- einen Rohrstutzen (12), der Abgase empfängt, und
- ein Partikelfilter (14), das im Inneren dieses Rohrstutzens (12) aufgenommen ist, das imprägniert ist:
• mit einer ersten katalytischen Beschichtung, die einen ersten Stickstoffoxid-Reduktionskatalysator (NOₓ) bildet, und
• mit einer zweiten katalytischen Beschichtung, die einen Kohlenmonoxid (CO)-und Kohlenwasserstoff (HC)-Oxidationskatalysator bildet,
**dadurch gekennzeichnet, dass**
- die Leitung (8) ein zusätzliches Filter (30) umfasst, das in dem Rohrstutzen (12) stromaufwärts des Partikelfilters (14) untergebracht und mit einer katalytischen Beschichtung imprägniert ist, die einen zweiten Katalysator zur Reduktion der Stickstoffoxide (NOₓ) bildet, und
- das zusätzliche Filter (30) eine interne Struktur derart umfasst, dass das zusätzliche Filter (30) einen Lastverlust schafft, der niedriger ist als der Lastverlust, der von demselben Volumen des Partikelfilters (14), das mit derselben Menge derselben katalytischen Beschichtung imprägniert ist, geschaffen wird.

2. Abgasleitung (8) nach Anspruch 1, wobei:
- das Partikelfilter (14) Folgendes umfasst:
• Einlassleitungen (20) die nur auf einer Einlassseite (16) der Abgase münden,
• Auslassleitungen (22), die nur auf einer Auslassseite (18) der Abgase münden, und
• porige Wände, um die Einlassleitungen (20) und die Auslassleitungen fluidtechnisch zu verbinden,
- das zusätzliche Filter (30) Leitungen (33) umfasst, die auf einer Einlassseite (32) einerseits und auf einer Auslassseite (34) andererseits münden, wobei Durchmesser dieser Leitungen (33) größer ist als der Durchmesser der Poren der porigen Wände des Partikelfilters (14).

3. Abgasleitung (8) nach einem der vorhergehenden Ansprüche, wobei die spezifische Wärmekapazität des Werkstoffs, aus dem das zusätzliche Filter (30) hergestellt ist, kleiner ist als die spezifische Wärmekapazität des Werkstoffs, aus dem das Partikelfilter (14) hergestellt ist.

4. Abgasleitung (8) nach einem der vorhergehenden Ansprüche, wobei die Leitung (8) ein Reduktionsmittel umfasst, das sich zersetzt, wenn es erwärmt wird, um ein Reagens zu erzeugen, das bei der Reduktion der Stickstoffoxide durch die erste katalytische Beschichtung eingreift, und eine Einspritzdüse (28) zum Einspritzen dieses Reduktionsmittels in den Rohrstutzen (12) stromaufwärts des zusätzlichen Filters (30).

5. Abgasleitung (8) nach einem der vorhergehenden Ansprüche, wobei die katalytische Beschichtung, mit der das zusätzliche Filter (30) imprägniert ist, Zeolithe derart aufweist, dass die Zersetzung des Reduktionsmittels beschleunigt wird.

6. Abgasleitung (8) nach einem der vorhergehenden Ansprüche, wobei das zusätzliche Filter (30) aus Cordierit hergestellt ist und/oder das Partikelfilter (14) aus Siliziumkarbid hergestellt ist.

7. Abgasleitung (8) nach einem der vorhergehenden Ansprüche, wobei:
- die Einlassleitungen (20) des Partikelfilters nur mit der ersten katalytischen Beschichtung imprägniert sind, und
- die Auslassleitungen (22) nur mit der zweiten katalytischen Beschichtung imprägniert sind.

8. Antriebsbaugruppe (4), wobei diese Baugruppe Folgendes umfasst:
- einen Verbrennungsmotor (6) und
- eine Abgasleitung (8) gemäß einem der vorhergehenden Ansprüche.

9. Baugruppe (4) nach Anspruch 8, bei der der Motor (6) ein Dieselmotor ist.

10. Fahrzeug (2), **dadurch gekennzeichnet, dass** es eine Antriebsbaugruppe (4) nach Anspruch 8 oder 9 umfasst.

## Claims

1. An exhaust line (8) of an internal combustion engine (6), this exhaust line comprising:
- a pipe (12) receiving exhaust gases, and
- a particulate filter (14) housed in the interior of this pipe (12), impregnated:
▪ with a first catalytic coating forming a first reduction catalyst for nitrogen oxides (NOₓ), and
▪ with a second catalytic coating forming an oxidation catalyst for carbon monoxides (CO) and hydrocarbons (HC),
**characterized in that**:
- the line (8) comprises an additional filter (30), housed in the pipe (12) downstream of the particulate filter (14), and impregnated with a catalytic coating forming a second reduction catalyst for nitrogen oxides (NOₓ), and
- the additional filter (30) has an internal structure such that the additional filter (30) creates a pressure drop which is less than the pressure drop created by the same volume of particulate filter (14) impregnated with the same quantity of the same catalytic coating.

2. The exhaust line (8) according to Claim 1, in which:
- the particulate filter (14) comprises:
▪ inlet ducts (20) opening solely on an inlet face (16) for the exhaust gases,
▪ evacuation ducts (22) opening solely on an evacuation face (18) for the exhaust gases, and
▪ porous walls for fluidically connecting the inlet ducts (20) and the evacuation ducts,
- the additional filter (30) comprises ducts (33) opening on an inlet face (32) on the one hand and on an evacuation face (34) on the other hand, the diameter of these ducts (33) being greater than the diameter of the pores of the porous walls of the particulate filter (14).

3. The exhaust line (8) according to any one of the preceding claims, in which the specific heat capacity of the material of which the additional filter (30) is made is less than the specific heat capacity of the material of which the particulate filter (14) is made.

4. The exhaust line (8) according to any one of the preceding claims, in which the line (8) comprises a reducing agent which decomposes when it is heated to produce a reagent which intervenes in the reduction of nitrogen oxides by the first catalytic coating, and an injector (28) for injecting this reducing agent into the pipe (12) upstream of the additional filter (30).

5. The exhaust line (8) according to any one of the preceding claims, in which the catalytic coating with which the additional filter (30) is coated includes zeolites so as to accelerate the decomposition of the reducing agent.

6. The exhaust line (8) according to any one of the preceding claims, in which the additional filter (30) is made of cordierite and/or the particulate filter (14) is made of silicon carbide.

7. The exhaust line (8) according to any one of the preceding claims, in which:
- the inlet ducts (20) of the particulate filter are solely impregnated with the first catalytic coating, and
- the evacuation ducts (22) are solely impregnated with the second catalytic coating.

8. A drive assembly (4), this assembly comprising:
- an internal combustion engine (6), and
- an exhaust line (8) according to any one of the preceding claims.

9. An assembly (4) according to Claim 8, in which the engine (6) is an engine of the diesel type.

10. A vehicle (2), **characterized in that** it comprises a drive assembly (4) according to Claim 8 or 9.
